# EUROPEAN PATENT APPLICATION

(11) **EP 4 819 481 A1**
(43) Date of publication of application: **07.10.2026**
(21) Application number: 26169667.8
(22) Date of filing: 31.03.2026
(51) Int. Cl.: H02P 21/06, H02P 21/18, H02P 21/22

(54) **SYSTEMS AND METHODS FOR A PERMANENT MAGNET SYNCHRONOUS MOTOR**

(30) Priority: 31.03.2025 US 202519095313
(71) Applicant: Services Pétroliers Schlumberger, 75007 Paris (FR); Schlumberger Technology B.V., 2514 JG The Hague (NL)
(72) Inventor: SANA, Sridhar, Sugar Land, 77478 (US)
(74) Representative: Schlumberger Intellectual Property Department

(57) **Abstract**

A system for a permanent magnet synchronous motor (PMSM) includes: a command controller dividing a torque command value by a motor torque constant to generate a reference quadrature component value (CV) of a stator current (I_{q_ref}), an offset controller: receiving and offsetting a fixed rotor angle value (θ_{e_fixed}) by -90° to output an applied rotor angle value (θ_{e_applied}), a torque controller: receiving a reference direct CV of the stator current (I_{d_ref}) combined with a direct CV of stator current (I_{d}), outputting a direct component of stator voltage (V_{ds}), receiving the I_{q_ref} combined with a quadrature CV of stator current (I_{q}), and outputting a quadrature component of stator voltage vector (V_{qs}), a transfer function generator: receiving the V_{ds}, V_{qs}, and θ_{e_applied}, and generating first and second voltage values, and a space vector PWM generator: receiving the first and the second voltage values and generating a PWM waveform for the PMSM.

## Description

### TECHNICAL FIELD

This disclosure generally relates to systems and methods for a permanent magnet synchronous motor.

### BACKGROUND

A permanent magnet synchronous motor (PMSM) is an alternating current (AC) synchronous motor that uses permanent magnets for field excitation. PMSMs are efficient, brushless, fast, safe, and give a high dynamic performance. Therefore, PMSMs are widely used in various applications across multiple fields.

For example, PMSMs are used in several downhole drilling and mining applications, including mud-pulse telemetry. Accurate position offset is crucial for the proper operation of a PMSM. Accurate position offset ensures precise rotor position detection, which is important for optimal torque production and efficient motor control. Without accurate position offset, the motor may experience problems, such as increased vibrations, reduced efficiency, and potential instability, leading to suboptimal performance and possible damage over time.

One of the most used methods is to determine position offset by locking motor shaft into known electrical positions and comparing with measured electrical angles. To overcome errors due to variability with respect to shaft angle, an average of the position offsets determined at different shaft angles is typically used. Application of this method in measurement while drilling (MWD) tools brings additional challenges due to variability in drive voltage and due to large angle dependent load torques present in the system, which lead to significant errors in offset.

Accordingly, there is a need for systems and methods for a permanent magnet synchronous motor.

### SUMMARY

This disclosure pertains to systems and methods for a permanent magnet synchronous motor.

A first aspect of this disclosure pertains to a system for controlling a permanent magnet synchronous motor (PMSM), including: a torque command controller configured to: receive a torque command value (Torque_{command}), divide the torque command value (Torque_{command}) by a motor torque constant for the PMSM (K_{T}) to generate a reference quadrature component value of a stator current in a rotor frame of reference (I_{q_ref}), and output the reference quadrature component value of the stator current in the rotor frame of reference (I_{q_ref}), an offset controller configured to: receive a fixed rotor angle value (θ_{e_fixed}), and offset the fixed rotor angle value (θ_{e_fixed}) by -90° (degrees) to generate and output an applied rotor angle value (θ_{e_applied}), a torque proportional-integral-derivative (PID) controller including: an I_{d} PID controller configured to: receive a reference direct component value of the stator current in the rotor frame of reference (I_{d_ref}) combined with a generated direct component value of stator current (I_{d}), and output a direct component of stator voltage vector in the rotor frame of reference (V_{ds}), and an I_{q} PID controller configured to: receive the reference quadrature component value of the stator current in the rotor frame of reference (I_{q_ref}) combined with a generated quadrature component value of stator current (I_{q}), and output a quadrature component of stator voltage vector in the rotor frame of reference (V_{qs}), a field-oriented control (FOC) transfer function generator configured to: receive: the direct component of stator voltage vector in the rotor frame of reference (V_{ds}), the quadrature component of stator voltage vector in the rotor frame of reference (V_{qs}), and the applied rotor angle value (θ_{e_applied}), generate: a first voltage value in an α axis in a stator frame of reference (V_{αs}), and a second voltage value in a β axis in the stator frame of reference (V_{βs}), and a space vector (SV) pulse width modulation (PWM) generator configured to: receive, from the FOC transfer function generator: the first voltage value (V_{αs}), and the second voltage value (V_{βs}), and generate a PWM waveform to operate the PMSM based on the first voltage value (V_{αs}) and the second voltage value (V_{βs}), the PWM waveform including a respective duty cycle waveform component (*Tₐ, T_{b}, T_{c}*) for each phase of the PMSM.

A second aspect of this disclosure pertains to the system of the first aspect, wherein the FOC transfer function generator includes: a Clarke transformation generator configured to transform three-phase current values (Iₐₛ, I_{bs}, I_{cs}) from the PMSM from a three-phase reference frame into two-axis orthogonal stationary reference frame values (I_{αs}, I_{βs}) using a Clarke transformation, a Park transformation generator configured to transform the two-axis orthogonal stationary reference frame values (I_{αs}, I_{βs}) from the Clarke transformation generator, with the applied rotor angle value (θ_{e_applied}) from the offset controller, into rotating reference frame values using a Park transformation, the rotating reference frame values including: the generated direct component value of stator current (I_{d}), and the generated quadrature component value of stator current (I_{q}), and an inverse Park transformation generator configured to transform values in the rotating reference frame to the two-axis orthogonal stationary reference frame using an Inverse Park transformation by: receiving: the applied rotor angle value (θ_{e_applied}) from the offset controller, the direct component of stator voltage vector in the rotor frame of reference (V_{ds}) from the I_{d} PID controller, and the quadrature component of stator voltage vector in the rotor frame of reference (V_{qs}) from the I_{q} PID controller, and outputting: the first voltage value (V_{αs}), and the second voltage value (V_{βs}).

A third aspect of this disclosure pertains to the system of the second aspect, and further includes: a plurality of gate drivers configured to: receive the duty cycle waveform components from the SV PWM generator, and convert the duty cycle waveform components into respective pulse wave modulated signals, and a power inverter configured to: receive the pulse wave modulated signals, and provide the pulse wave modulated signals to the PMSM.

A fourth aspect of this disclosure pertains to the system of the third aspect, and further includes: an analog-to-digital converter (ADC) configured to: receive the pulse wave modulated signals from the power inverter, and convert the pulse wave modulated signals into the three-phase current values (Iₐₛ, I_{bs}, I_{cs}).

A fifth aspect of this disclosure pertains to the system of the fourth aspect, and further includes: a resolver configured to measure degrees of rotation of the PMSM, and a resolver-to-digital converter (RDC) configured to: receive the measured degrees of rotation from the resolver, and determine: the first rotor angle value (θₘ) for the position PID controller, and a rotor speed (ωₘ).

A sixth aspect of this disclosure pertains to the system of the fifth aspect, and further includes a pole pair converter configured to convert the first rotor angle value (θₘ) into a second rotor angle value (θₑ).

A seventh aspect of this disclosure pertains to the system of the second aspect, wherein the Clark transformation is expressed by: ${I}_{αs} = {I}_{as} ,$ ${I}_{βs} = \frac{1}{\sqrt{3}} \left({I}_{as}+2{I}_{ab}\right) ,$ and ${I}_{as} + {I}_{bs} + {I}_{cs} = 0 ,$ where *I_{αs}, I_{βs}* are orthogonal stationary reference frame quantities.

An eighth aspect of this disclosure pertains to the system of the seventh aspect, wherein the Park transformation is expressed by: ${I}_{d} = {I}_{αs} ∗ cos \left({θ}_{e _ applied}\right) + {I}_{βs} ∗ sin \left({θ}_{e _ applied}\right) ,$ ${I}_{q} = {I}_{βs} ∗ cos \left({θ}_{e _ applied}\right) - {I}_{αs} ∗ sin \left({θ}_{e _ applied}\right) ,$ and ${θ}_{e} = PP ∗ {θ}_{m} ,$ where:
*I_{d}, I_{q}* are components of a stator current vector in the rotating reference frame,
*I_{d}* is in line with a rotor magnetic field,
*I_{q}* is in quadrature with the rotor magnetic field, and
*θ_{e_applied}* is an angle of rotation in an electrical domain.

A ninth aspect of this disclosure pertains to the system of the eighth aspect, wherein the Inverse Park transformation is expressed by: ${V}_{αs} = {V}_{d} ∗ cos \left({θ}_{e _ applied}\right) - {V}_{q} ∗ sin \left({θ}_{e _ applied}\right) ,$ and ${V}_{βs} = {V}_{q} ∗ cos \left({θ}_{e _ applied}\right) - {V}_{d} ∗ sin \left({θ}_{e _ applied}\right) ,$ where:
*V_{αs}, V_{βs}* are orthogonal stationary reference frame quantities, and
*V_{d}, V_{q}* are rotating reference frame quantities.

A tenth aspect of this disclosure pertains to the system of the first aspect, and further includes a variable-frequency power supply configured to supply power to the PMSM.

An eleventh aspect of this disclosure pertains to a method for controlling a permanent magnet synchronous motor (PMSM), the method including: receiving a torque command value (Torque_{command}) via a torque command controller, dividing the torque command value (Torque_{command}) by a motor torque constant for the PMSM (K_{T}) to generate a reference quadrature component value of a stator current in a rotor frame of reference (I_{q_ref}) via the torque command controller, outputting the reference quadrature component value of the stator current in the rotor frame of reference (I_{q_ref}) via the torque command controller, receiving a fixed rotor angle value (θ_{e_fixed}) via an offset controller, offsetting the fixed rotor angle value (θ_{e_fixed}) by -90° (degrees) to generate and output an applied rotor angle value (θ_{e_applied}) via the offset controller, receiving a reference direct component value of the stator current in the rotor frame of reference (I_{d_ref}) combined with a generated direct component value of stator current (I_{d}) via a torque proportional-integral-derivative (PID) controller including an I_{d} PID controller, outputting a direct component of stator voltage vector in the rotor frame of reference (V_{ds}) via the I_{d} PID controller, receiving the reference quadrature component value of the stator current in the rotor frame of reference (I_{q_ref}) combined with a generated quadrature component value of stator current (I_{q}) via the torque PID controller further including an I_{q} PID controller, outputting a quadrature component of stator voltage vector in the rotor frame of reference (V_{qs}) via the I_{q} PID controller, receiving, via a field-oriented control (FOC) transfer function generator: the direct component of stator voltage vector in the rotor frame of reference (V_{ds}), the quadrature component of stator voltage vector in the rotor frame of reference (V_{qs}), and the applied rotor angle value (θ_{e_applied}), generating, via the FOC transfer function generator: a first voltage value in an α axis in a stator frame of reference (V_{αs}), and a second voltage value in a β axis in the stator frame of reference (V_{βs}), receiving, via a space vector (SV) pulse width modulation (PWM) generator from the FOC transfer function generator: the first voltage value (V_{αs}), and the second voltage value (V_{βs}), and generating, via the SV PWM generator, a PWM waveform to operate the PMSM based on the first voltage value (V_{αs}) and the second voltage value (V_{βs}), the PWM waveform including a respective duty cycle waveform component (*Tₐ, T_{b}, T_{c}*) for each phase of the PMSM.

A twelfth aspect of this disclosure pertains to the method of the eleventh aspect, wherein the FOC transfer function generator includes: a Clarke transformation generator configured to transform three-phase current values (Iₐₛ, I_{bs}, I_{cs}) from the PMSM from a three-phase reference frame into two-axis orthogonal stationary reference frame values (I_{αs}, I_{βs}) using a Clarke transformation, a Park transformation generator configured to transform the two-axis orthogonal stationary reference frame values (I_{αs}, I_{βs}) from the Clarke transformation generator, with the applied rotor angle value (θ_{e_applied}) from the offset controller, into rotating reference frame values using a Park transformation, the rotating reference frame values including: the generated direct component value of stator current (I_{d}), and the generated quadrature component value of stator current (I_{q}), and an inverse Park transformation generator configured to transform values in the rotating reference frame to the two-axis orthogonal stationary reference frame using an Inverse Park transformation by: receiving: the applied rotor angle value (θ_{e_applied}) from the offset controller, the direct component of stator voltage vector in the rotor frame of reference (V_{ds}) from the I_{d} PID controller, and the quadrature component of stator voltage vector in the rotor frame of reference (V_{qs}) from the I_{q} PID controller, and outputting: the first voltage value (V_{αs}), and the second voltage value (V_{βs}).

A thirteenth aspect of this disclosure pertains to the method of the twelfth aspect, and further includes: a plurality of gate drivers configured to: receive the duty cycle waveform components from the SV PWM generator, and convert the duty cycle waveform components into respective pulse wave modulated signals, and a power inverter configured to: receive the pulse wave modulated signals, and provide the pulse wave modulated signals to the PMSM.

A fourteenth aspect of this disclosure pertains to the method of the thirteenth aspect, and further includes: an analog-to-digital converter (ADC) configured to: receive the pulse wave modulated signals from the power inverter, and convert the pulse wave modulated signals into the three-phase current values (Iₐₛ, I_{bs}, I_{cs}).

A fifteenth aspect of this disclosure pertains to the method of the fourteenth aspect, and further includes: a resolver configured to measure degrees of rotation of the PMSM, and a resolver-to-digital converter (RDC) configured to: receive the measured degrees of rotation from the resolver, and determine: the first rotor angle value (θₘ) for the position PID controller, and a rotor speed (ωₘ).

A sixteenth aspect of this disclosure pertains to the method of the fifteenth aspect, and further includes a pole pair converter configured to convert the first rotor angle value (θₘ) into a second rotor angle value (θₑ).

A seventeenth aspect of this disclosure pertains to the method of the twelfth aspect, wherein the Clark transformation is expressed by: ${I}_{αs} = {I}_{as} ,$ ${I}_{βs} = \frac{1}{\sqrt{3}} \left({I}_{as}+2{I}_{bs}\right) ,$ and ${I}_{as} + {I}_{bs} + {I}_{cs} = 0 ,$ where *I_{αs}, I_{βs}* are orthogonal stationary reference frame quantities.

An eighteenth aspect of this disclosure pertains to the method of the seventeenth aspect, wherein the Park transformation is expressed by: ${I}_{d} = {I}_{αs} ∗ cos \left({θ}_{e _ applied}\right) + {I}_{βs} ∗ sin \left({θ}_{e _ applied}\right) ,$ ${I}_{q} = {I}_{βs} ∗ cos \left({θ}_{e _ applied}\right) - {I}_{αs} ∗ sin \left({θ}_{e _ applied}\right) ,$ and ${θ}_{e} = PP ∗ {θ}_{m} ,$ where:
*I_{d}, I_{q}* are components of a stator current vector in the rotating reference frame,
*I_{d}* is in line with a rotor magnetic field,
*I_{q}* is in quadrature with the rotor magnetic field, and
*θ_{e_applied}* is an angle of rotation in an electrical domain.

A nineteenth aspect of this disclosure pertains to the method of the eighteenth aspect, wherein the Inverse Park transformation is expressed by: ${V}_{αs} = {V}_{d} ∗ cos \left({θ}_{e _ applied}\right) - {V}_{q} ∗ sin \left({θ}_{e _ applied}\right) ,$ and ${V}_{βs} = {V}_{q} ∗ cos \left({θ}_{e _ applied}\right) + {V}_{d} ∗ sin \left({θ}_{e _ applied}\right) ,$ where:
*V_{αs}, V_{βs}* are orthogonal stationary reference frame quantities, and
*V_{d}, V_{q}* are rotating reference frame quantities.

A twentieth aspect of this disclosure pertains to the method of the eleventh aspect, and further includes a variable-frequency power supply configured to supply power to the PMSM.

This summary is provided to introduce a selection of concepts that are further described below in the detailed description. This summary is not intended to identify key or essential features of the claimed subject matter, nor is it intended to be used as an aid in limiting the scope of the claimed subject matter.

Additional features and advantages of embodiments of the disclosure will be set forth in the description which follows, and in part will be obvious from the description, or may be learned by the practice of such embodiments. The features and advantages of such embodiments may be realized and obtained by means of the instruments and combinations particularly pointed out in the appended claims. These and other features will become more fully apparent from the following description and appended claims or may be learned by the practice of such embodiments as set forth hereinafter.

### BRIEF DESCRIPTION OF DRAWINGS

To describe the manner in which the above-recited and other features of the disclosure can be obtained, a more particular description will be rendered by reference to specific implementations thereof which are illustrated in the appended drawings. For better understanding, the like elements have been designated by like reference numbers throughout the various accompanying figures. While some of the drawings may be schematic or exaggerated representations of concepts, at least some of the drawings may be drawn to scale. Understanding that the drawings depict some example implementations, the implementations will be described and explained with additional specificity and detail through the use of the accompanying drawings in which:
FIG. 1 is an exploded perspective view of a permanent magnet synchronous motor (PMSM).
FIG. 2 is a cross-sectional view of two types of PMSMs.
FIG. 3 is a perspective view of a PMSM.
FIG. 4 is a block diagram of a related art field-oriented control (FOC) system.
FIG. 5 is a graph showing a Clarke transformation.
FIG. 6 is a graph showing a Park transformation.
FIG. 7 is a graph showing an Inverse Park transformation.
FIG. 8 is a graph of a duty cycle waveform.
FIG. 9 is a block diagram of a related art proportional-integral-derivative (PID) control system with anti-windup.
FIG. 10 is a block diagram of a fixed angle torque control system according to an example embodiment of the present disclosure.
FIG. 11 is a graph of experimental results using the system of FIG. 10 with a PMSM.
FIG. 12 is a functional block diagram of a motor control firmware according to an example embodiment of the present disclosure.
FIG. 13 illustrates certain components that may be included within a computer system according to an example embodiment of the present disclosure.

Before explaining the disclosed embodiment of this disclosure in detail, it is to be understood that the invention is not limited in its application to the details of the particular arrangement shown, as the invention is capable of other embodiments. Example embodiments are illustrated in referenced figures of the drawings. It is intended that the embodiments and figures disclosed herein are to be considered illustrative rather than limiting. Also, the terminology used herein is for the purpose of description and not of limitation.

### DETAILED DESCRIPTION

While the subject disclosure applies to embodiments in many different forms, there are shown in the drawings and will be described in detail herein specific embodiments with the understanding that the present disclosure is an example of the principles of the invention. It is not intended to limit the invention to the specific illustrated embodiments. The features of the invention disclosed herein in the description, drawings, and claims can be significant, both individually and in any desired combinations, for the operation of the invention in its various embodiments. Features from one embodiment can be used in other embodiments of the invention. In the description of the drawings, like reference numerals refer to like elements.

A permanent magnet synchronous motor (PMSM) is a brushless motor known for its high reliability and efficiency. Its permanent magnet rotor provides high torque with a compact frame size and eliminates rotor current. Instead of rotor windings, permanent magnets create a rotating magnetic field, making these motors simple and cost-effective due to the absence of a DC (direct current) power supply. PMSMs are AC (alternating current) synchronous motors with field excitation from permanent magnets and a sinusoidal back electromotive force (EMF) waveform. The permanent magnets allow the PMSM to generate torque even at zero speed. This motor offers high-efficiency operation and requires a digitally controlled inverter.

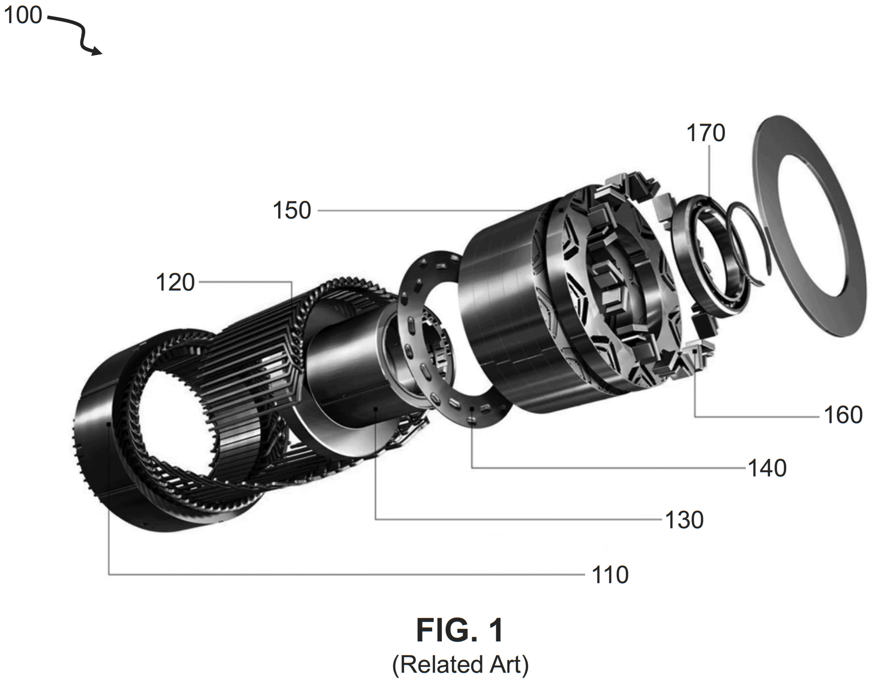

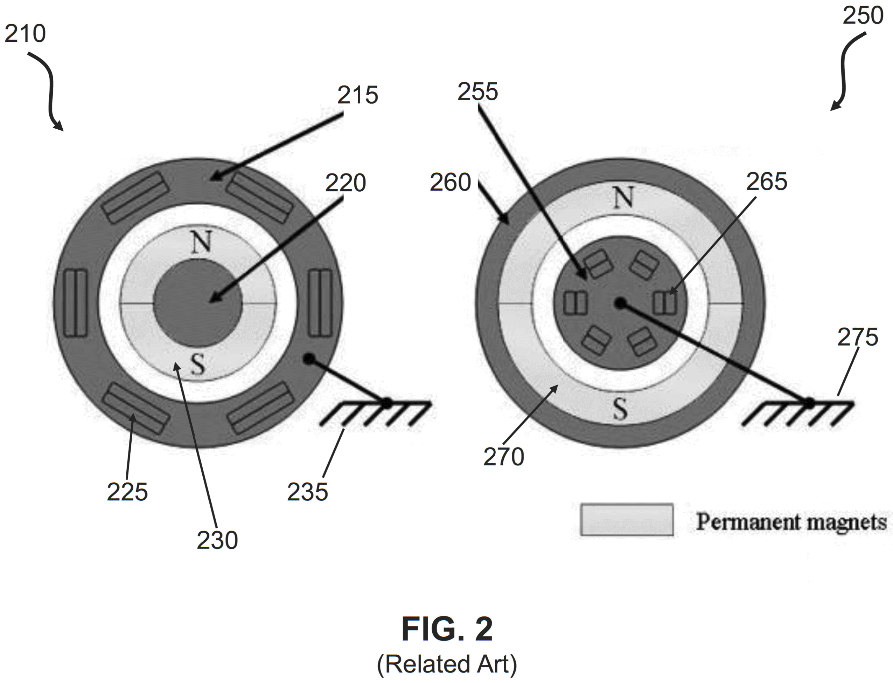

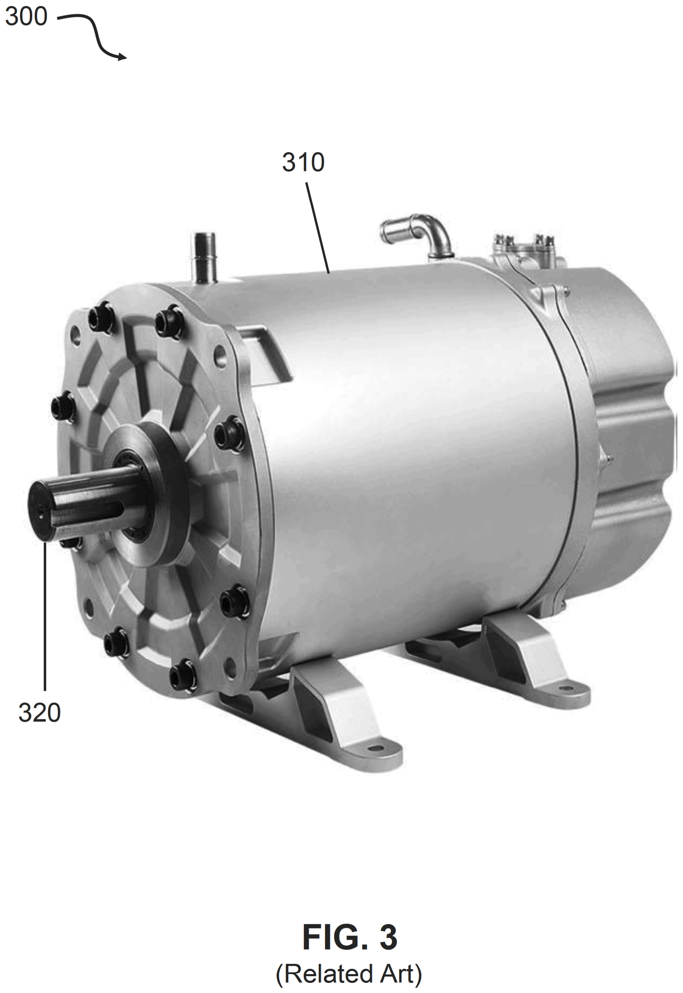

FIG. 1 is an exploded perspective view of a permanent magnet synchronous motor (PMSM). FIG. 2 is a cross-sectional view of two types of PMSMs. FIG. 3 is a perspective view of a PMSM.

With reference to FIG. 1, a permanent magnet synchronous motor (PMSM) 100 may include a stator core 110 (e.g., made from laminated steel), bar-wound wire 120, a rotor hub 130, a plate 140 (e.g., a steel plate), rotor core sections 150 (e.g., made from laminated steel), magnets 160, and a bearing support assembly 170. In this type of motor, permanent magnets (e.g., the magnets 160) may be mounted on a rotor (e.g., the rotor core sections 150), which may not have any field winding.

With reference to FIG. 2, an example of a PMSM may be a first PMSM 210 that may include an outer stator 215 and an inner rotor 220, with windings 225 in the outer stator 215, and permanent magnets 230 between the outer stator 215 and the inner rotor 220. The first PMSM 210 may also include an electrical ground connection 235 at the outer stator 215. With further reference to FIG. 2, in an alternative example of a PMSM, a second PMSM 250 may include an inner stator 255 and an outer rotor 260, with windings 265 in the inner stator 255, and permanent magnets 270 between the outer stator 215 and the inner rotor 220. The second PMSM 250 may also include an electrical ground connection 275 at the inner stator 255, e.g., at the center of the second PMSM 250.

With reference to FIG. 3, a motor 300 may include a chassis 310 that may house the components of the motor 300, for example, the components shown in FIGs. 1-2. A shaft 320 may pass through the center of the motor 300, which may also pass through the center of the components shown in FIGs. 1-2. The shaft 320 may be operatively rotated by the motor 300 to rotate a load.

The magnets create magnetic field poles and may be made from various materials, such as samarium-cobalt and medium, iron, and boron, for example, due to their high permeability. The most commonly used permanent magnet is neodymium-boron-iron because it is often cost-effective and readily available. When the stator winding is energized with a three-phase power supply, it creates a rotating magnetic field in the air gaps. This field may generate torque as the rotor field poles lock onto the rotating magnetic field at synchronous speed, causing the rotor to rotate continuously. Because PMSMs are not self-starting, a variable-frequency power supply may provide the power.

Because permanent magnet synchronous motors are driven with sinusoidal waveforms, the control complexity increases. PMSMs require a control system, such as a variable-frequency drive or a servo drive. Example embodiments of the present disclosure may provide a process for automatic position offset determination for a permanent magnet synchronous motor (PMSM) that is immune to variability in drive voltage in the presence of large angle dependent load torques. Example embodiments may lock the motor shaft in to known electrical angles accurately using a variant of typical torque control method but with known fixed position feedback. The fixed position feedback may be related to the desired electrical angle and may have a -90° (degree) offset. Such fixed position feedback torque control may ensure that the torque applied to lock the motor shaft is independent of the drive voltage. Also, when the load torques are known, the fixed angle torque controller can be commanded to apply a large enough torque to overcome the load torques. This can ensure that the motor is locking into the expected electrical angle independent of the drive voltage and in the presence of any load torques. As such, an algorithm used in example embodiments may be more generic and easier to port to other tools than in conventional solutions, even if the drive voltages and load torques are different. Furthermore, example embodiments of the present disclosure may provide automated in-situ determination of position offset for permanent magnet synchronous motors subjected to positionally variable loads in systems with variable voltage drives.

A control system in which the control action is entirely independent of the system's output is known as an open-loop control system. Open-loop control systems may have several advantages. They may be simple in construction and design, making them economical and easy to maintain. These systems may be generally stable and convenient to use, especially when it is difficult to measure the output.

A control system in which the output influences the input quantity, causing it to adjust based on the generated output, is known as a closed-loop control system. By incorporating feedback, an open-loop control system can be transformed into a closed-loop control system. This feedback mechanism automatically adjusts the output in response to external disturbances, making the closed-loop control system an automatic control system. Closed-loop control systems may offer several advantages. They may be more accurate, even when non-linearities are present, because any errors may be corrected by the feedback signal. These systems may have a large bandwidth range and facilitate automation. Additionally, the sensitivity of the system can be reduced to enhance stability, and they may be less affected by noise.

Example embodiments of the present disclosure may adapt a PMSM controller based on field-oriented control (FOC) for the purpose of position offset calibration. For example, the motor shaft may be rotated to known angles using only a torque control loop in open loop mode. For instance, the angle measurement from the position sensor may be used only for comparison with known and/or desired angles to determine the error at that angle. However, the torque control loop may be a closed-loop system using feedback from the PMSM.

In example embodiments, an FOC-based PMSM controller may be used for position offset calibration. One advantage of example embodiments is that they may provide automatic determination of the duty cycle needed to move the motor shaft to a known angle, regardless of the voltage level of the drive power supply. Another advantage of example embodiments is that they may provide the ability to preset the applied torque to overcome known loads present on the motor shaft, which can be set ahead of time to ensure that the motor shaft is moving to the known angle. This can enable the calibration to be performed in-situ, such that the PMSM does not have to be removed from an installation and/or disassembled for calibration.

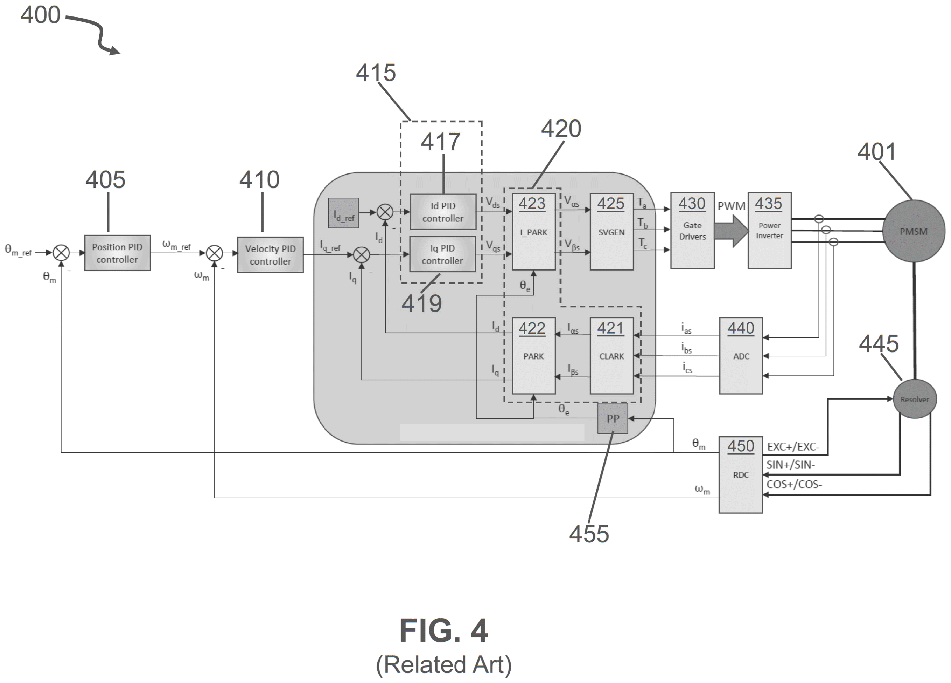

FIG. 4 is a block diagram of a related art field-oriented control (FOC) system.

FIG. 4 illustrates an example of a related art control system 400 for controlling a PMSM 401. The control system 400 may include an optional position proportional-integral-derivative (PID) controller 405, a speed (or velocity) PID controller 410, a torque PID controller 415, a FOC transfer function generator 420, and a space vector (SV) PWM generator (SVGEN) 425. The torque PID controller 415 may include a current *I_{d}* PID controller 417 and a current *I_{q}* PID controller 419. *Tₐ, T_{b},* and *T_{c}* duty cycle waveforms may be provided from the SV PWM generator 425 to gate drivers 430, which may provide PWM signals to a power inverter 435. The power inverter 435 may control the PMSM 401 and may also provide analog signals to an analog-to-digital converter (ADC) 440. A resolver 445 may be provided to measure degrees of rotation of the PMSM 401. The resolver 445 may provide information to a resolver-to-digital converter (RDC) 450 that may determine a rotor angle value in a mechanical domain (θₘ) for the position PID controller 405 and a rotor speed in a mechanical domain (ωₘ) for the speed (or velocity) PID controller 410. The RDC 450 may provide the rotor angle value in the mechanical domain (θₘ) to a pole pair converter (PP) 455 that may convert the rotor angle value in the mechanical domain (θₘ) into a rotor angle value in an electrical domain (θₑ).

Depending on the application, several different controllers can be implemented by configuring the control system above such as:
1. A torque-only controller;
2. A two-level controller with Velocity controller in the outer loop with an internal Torque control; or
3. A three-level controller with Position controller at outer loop, Velocity controller at the next level and an internal torque controller.

The torque-only controller is a basic controller that includes all features of an FOC system, which are described in detail below.

### - Control Functions

The FOC transfer function generator 420 may include, for example, a Clarke transformation generator (CLARK) 421, a Park transformation generator (PARK) 422, and an inverse Park transformation generator (I_PARK) 423. Clarke and Park transformations may be used in vector control architectures related to PMSMs and asynchronous motors.

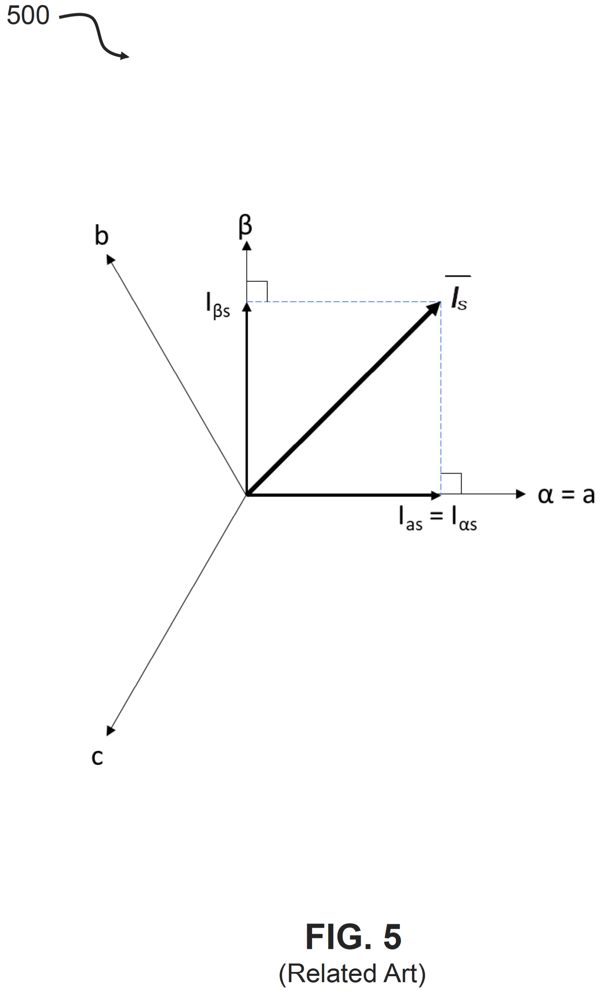

FIG. 5 is a graph showing a Clarke transformation.

Three-phase quantities (e.g., currents *I**ₐₛ**, **I_{bs}*** and ***I_{cs}***) may be translated from a three-phase reference frame to a two-axis orthogonal stationary reference frame using a Clarke transformation as shown in graph 500 in FIG. 5, which may be performed by the Clarke transformation generator (CLARK) 421 of FIG. 4. FIG. 5 illustrates a stator current space vector and its components in a stationary reference frame. The Clarke transformation may be expressed by the following Equations 1 and 2: [Equation 1] ${I}_{αs} = {I}_{as}$ [Equation 2] ${I}_{βs} = \frac{1}{\sqrt{3}} \left({I}_{as}+2{I}_{bs}\right)$
where *Iₐₛ + I_{bs} + I_{cs}* = 0, and *I_{αs}, I_{βs}* are orthogonal stationary reference frame quantities.

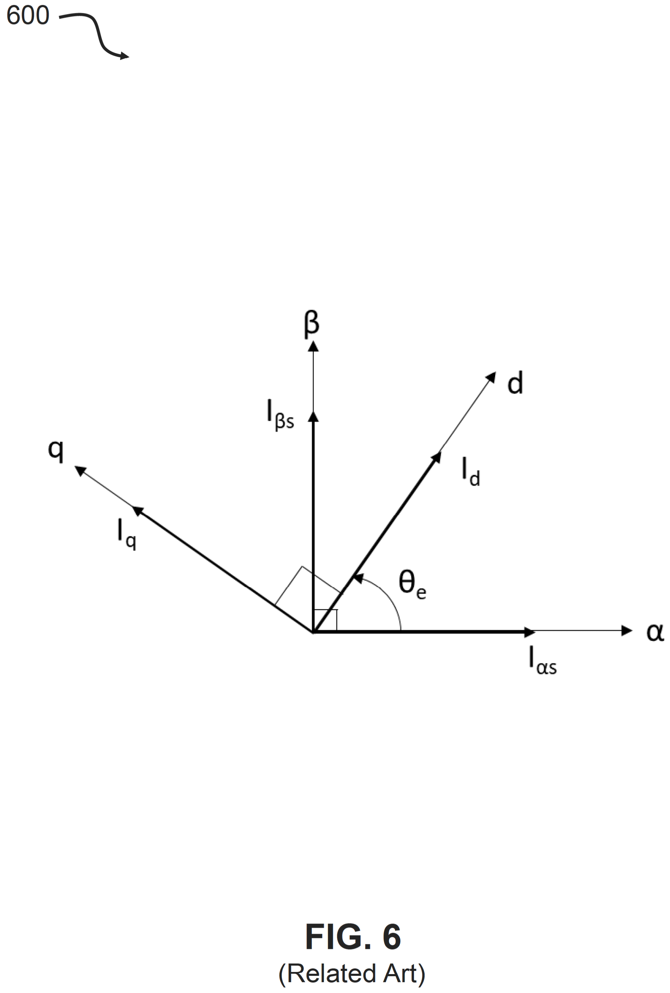

FIG. 6 is a graph showing a Park transformation.

The two-axis orthogonal stationary reference frame quantities may be transformed into rotating reference frame quantities using a Park transformation as shown in graph 600 in FIG. 6, which may be performed by the Park transformation generator (PARK) 422 of FIG. 4. The Park transformation may be expressed by the following Equations 3 and 4: [Equation 3] ${I}_{d} = {I}_{αs} ∗ cos \left({θ}_{e}\right) + {I}_{βs} ∗ sin \left({θ}_{e}\right)$ [Equation 4] ${I}_{q} = {I}_{βs} ∗ cos \left({θ}_{e}\right) - {I}_{αs} ∗ sin \left({θ}_{e}\right)$
where *I_{d}, I_{q}* are components of stator current vector in rotating reference frame, *I_{d}* is in line with rotor magnetic field, and *I_{q}* is in quadrature with the rotor magnetic field. *θₑ* is the angle of rotation in an electrical domain according to Equation 5: [Equation 5] ${θ}_{e} = PP ∗ {θ}_{m}$
where *θₘ* is the angle of rotation in mechanical domain, and PP is the number of pole pairs in the PMSM.

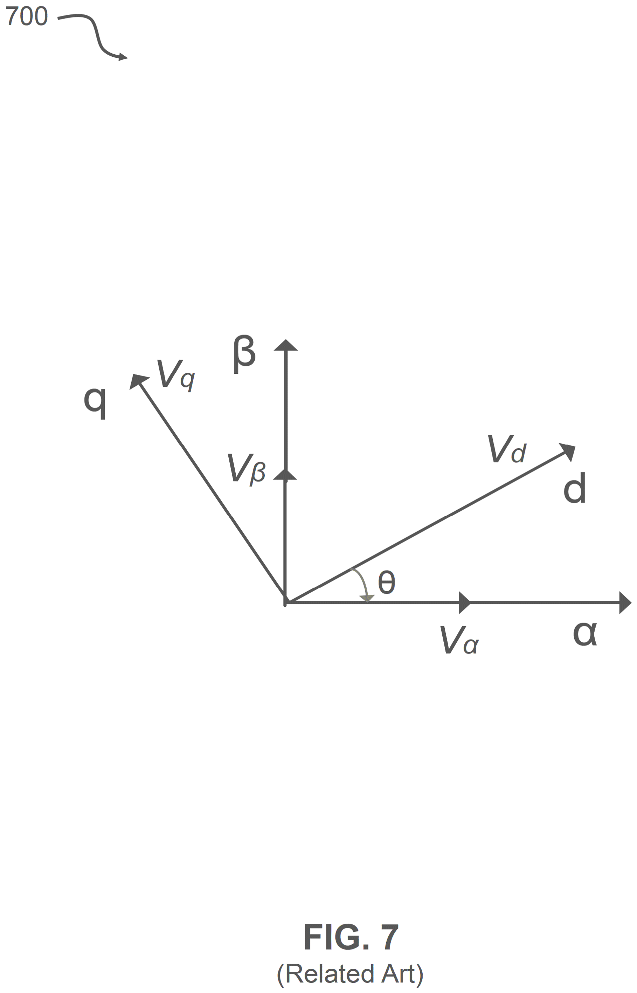

FIG. 7 is a graph showing an Inverse Park transformation.

Quantities in a rotating reference frame may be transformed to the two-axis orthogonal stationary reference frame using an Inverse Park transformation as shown graph 700 in FIG. 7, which may be performed by the inverse Park transformation generator (I_PARK) 423 of FIG. 4. The Inverse Park transformation may be expressed by the following Equations 6 and 7: [Equation 6] ${V}_{αs} = {V}_{d} ∗ cos \left({θ}_{e}\right) - {V}_{q} ∗ sin \left({θ}_{e}\right)$ [Equation 7] ${V}_{βs} = {V}_{q} ∗ cos \left({θ}_{e}\right) + {V}_{d} ∗ sin \left({θ}_{e}\right)$
where *V_{αs}, V_{βs}* are orthogonal stationary reference frame quantities, and *V_{d}, V_{q}* are rotating reference frame quantities.

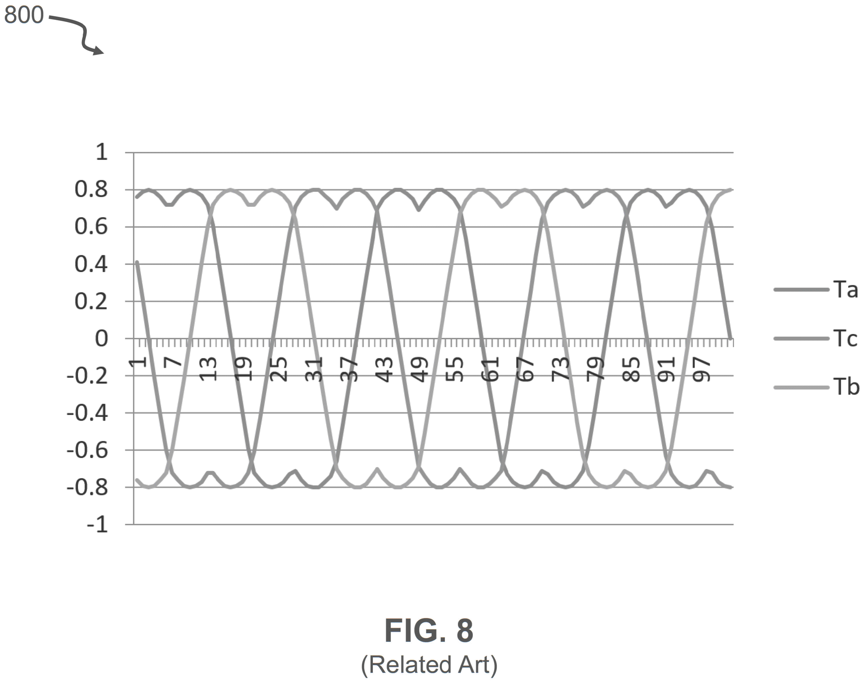

FIG. 8 is a graph of a duty cycle waveform.

The space vector (SV) PWM generator 425 of FIG. 4 may calculate a duty cycle ratio that may generate a given stator reference voltage using a space vector PWM technique. The stator reference voltage may be described by its *α* and *β* components (e.g., *V_{αs}, V_{βs}*)*,* which may be outputs of the Inverse Park transformation, e.g., by the inverse Park transformation generator (I_PARK) 423 of FIG. 4. Three PWM duty cycle ratios (e.g., *Tₐ, T_{b},* and *T_{c}*) generated by the SV PWM generator 425 may be directly applied to the 3-phases of the stator, e.g., the outer stator 215 or the inner stator 255 of FIG. 2. The *Tₐ, T_{b},* and *T_{c}* duty cycles may be normalized to the range of -1 to +1, which may represent 0% to 100% of a PWM duty cycle. An example of a waveform of *Tₐ, T_{b},* and *T_{c}* is illustrated in graph 800 of FIG. 8. The *Tₐ, T_{b},* and *T_{c}* duty cycle waveforms are 120° apart from each other. For example, *T_{b}* lags *Tₐ* by 120°, and *T_{c}* leads *Tₐ* by 120°. However, examples are not limited thereto.

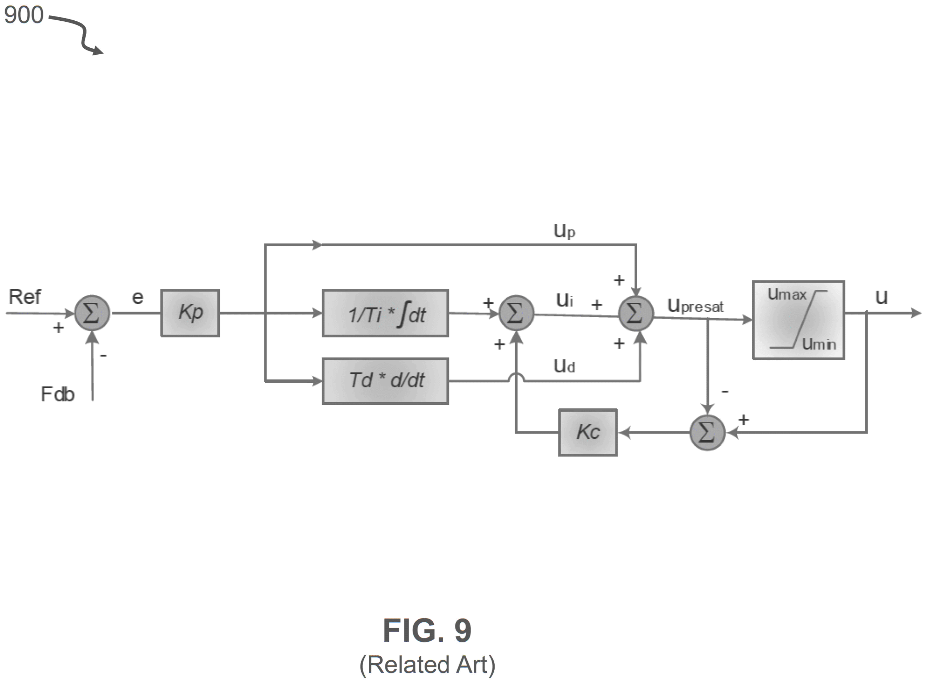

FIG. 9 is a block diagram of a related art proportional-integral-derivative (PID) control system with anti-windup.

As described above, there may be four PID controllers in a PMSM control system using FOC. For example, the control system may include a position PID controller 405, a speed (or velocity) PID controller 410, a current *I_{d}* PID controller 417, and a current *I_{q}* PID controller 419. A PID control system 900 with integrator anti-windup is shown in FIG. 9. In FIG. 9, 'u' is the output of PID controller, *'uₚᵣₑₛₐₜ'* is the output before saturation, '*e*' is the error between the reference and feedback variables, *'Kₚ'* is the proportional gain of PID controller, *'Tᵢ'* is the integral time (or reset time) of PID controller, *'T_{d}'* is the derivative time of PID controller, and '*K_{c}*' is the integral correction gain of PID controller. A digitized output of each control path may be described in the following Equations.

A pre-saturated output may be calculated according to Equation 8. [Equation 8] ${u}_{presat} \left(k\right) = {u}_{p} \left(k\right) + {u}_{i} \left(k\right) + {u}_{d} \left(k\right)$

A proportional term may be calculated according to Equation 9. [Equation 9] ${u}_{p} \left(k\right) = {K}_{p} e \left(k\right)$

An integral term with saturation correction may be calculated according to Equation 10. [Equation 10] ${u}_{i} \left(k\right) = {u}_{i} \left(k-1\right) + {K}_{p} \frac{T}{{T}_{i}} e \left(k\right) + {K}_{c} \left(u\left(k\right)-{u}_{presat}\left(k\right)\right)$

A derivative term may be calculated according to Equation 11. [Equation 11] ${u}_{d} \left(k\right) = {K}_{p} \frac{{T}_{d}}{T} \left(e\left(k\right)-e\left(k-1\right)\right)$

Defining ${K}_{i} = \frac{T}{{T}_{i}}$*,* and ${K}_{d} = \frac{{T}_{d}}{T}$*,* then an integral with saturation correction and derivative terms may finally become Equations 12 and 13 below. [Equation 12] ${u}_{i} \left(k\right) = {u}_{i} \left(k-1\right) + {K}_{i} {u}_{p} \left(k\right) + {K}_{c} \left(u\left(k\right)-{u}_{presat}\left(k\right)\right)$ [Equation 13] ${u}_{d} \left(k\right) = {K}_{d} \left(e\left(k\right)-e\left(k-1\right)\right)$
where *T* is the update period of the control loop. The saturation point may be controlled by setting *uₘₐₓ* and *uₘᵢₙ* for each PID controller.

With a fixed duty cycle, the applied torque can be lower than the load torque, and the motor shaft may not lock into the desired electrical angle leading to large errors in offset. The memo summarizes the method used to overcome these challenges in determining accurate position offset.

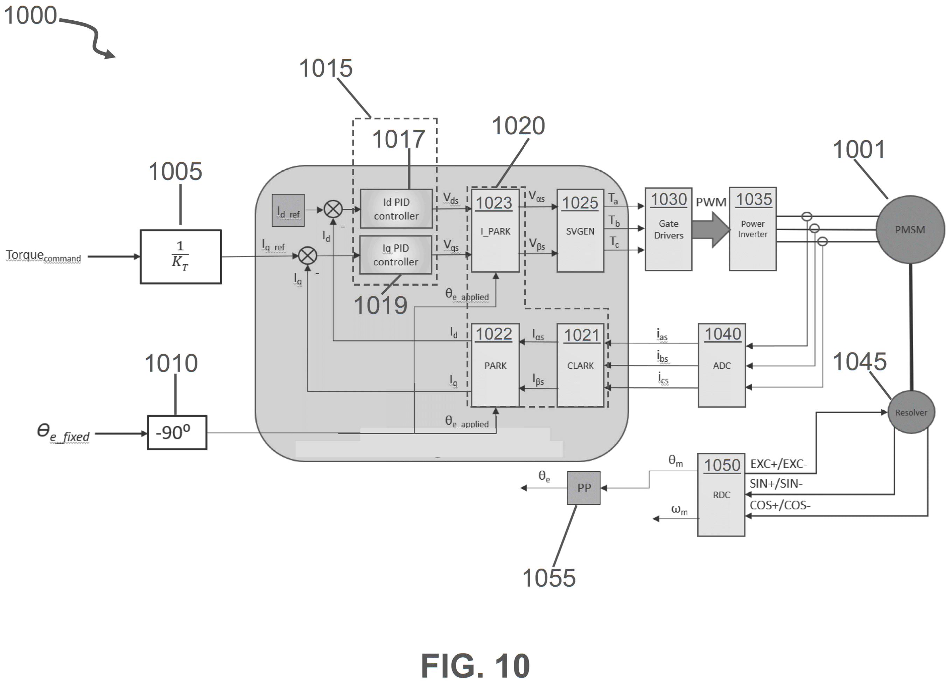

FIG. 10 is a block diagram of a fixed angle torque control system according to an example embodiment of the present disclosure.

A control system 1000 illustrated in FIG. 10 is a variant of a torque-control only system based on a FOC of a PMSM, and includes the following modifications:
1. An electrical angle (θ*_{e_fixed}*) used in FOC algorithm is fixed to a desired value instead of a measured electrical angle; and
2. A torque command input value (Torque_{command}) is chosen to be larger than the load torque based on knowledge of the system.

FIG. 10 illustrates an example of a control system 1000 for controlling a PMSM 1001. The control system 1000 may include a torque command conversion controller 1005 that converts a torque command input value (Torque_{command}) to a target/command value for Iq current control loop, e.g., I_{q_ref}, which is a reference quadrature component value of a stator current in a rotor frame of reference. The conversion may be performed, for example, dividing the torque command input value by K_{T}, which is a motor torque constant for the PMSM. The value for K_{T} may be provided by the manufacturer of the PMSM. The control system 1000 may further include an offset controller 1010 that applies a -90° (degree) offset to a fixed electrical angle input (θ*_{e_fixed}*) to generate an applied electrical angle (θ_{e_applied}).

The control system 1000 may further include features similar to the related art control system 400, for example, a torque PID controller 1015, a FOC transfer function generator 1020, and a space vector (SV) PWM generator (SVGEN) 1025. The torque PID controller 1015 may include a current *I_{d}* PID controller 1017 and a current *I_{q}* PID controller 1019. *Tₐ, T_{b},* and *T_{c}* duty cycle waveforms may be provided from the SV PWM generator 1025 to gate drivers 1030, which may provide PWM signals to a power inverter 1035. The FOC transfer function generator 1020 may include, for example, a Clarke transformation generator (CLARK) 1021, a Park transformation generator (PARK) 1022, and an inverse Park transformation generator (I_PARK) 1023. The power inverter 1035 may control the PMSM 1001 and may also provide analog signals to an analog-to-digital converter (ADC) 1040. A resolver 1045 may be provided to measure degrees of rotation of the PMSM 1001. The resolver 1045 may provide information to a resolver-to-digital converter (RDC) 1050 that may determine a rotor angle value in a mechanical domain (θₘ) for the position PID controller 1005 and a rotor speed in a mechanical domain (ωₘ) for the speed (or velocity) PID controller 1010. The RDC 1050 may provide the rotor angle value in the mechanical domain (θₘ) to a pole pair converter 1055 that may convert the rotor angle value in the mechanical domain (θₘ) into a rotor angle value in an electrical domain (θₑ).

The fixed position feedback used in the control system 1000 of the FIG. 10 example is related to the desired electrical angle, and has a -90° (degree) offset, e.g., provided by the offset controller 1010 by converting a fixed electrical angle (θ*_{e_fixed}*) to an applied electrical angle (θ_{e_applied}) input to the Park transformation generator (PARK) 1022 and the inverse Park transformation generator (I_PARK) 1023 in place of the angle of rotation in an electrical domain (θₑ) provided by the pole pair converter (PP) 455 in the FIG. 4 control system 400.

In the control system 1000 of FIG. 10, the control loop does not involve feedback of either motor speed, e.g., the rotor speed (ωₘ), or motor angle, e.g., the rotor angle value (θₑ). However, the values of the and rotor speed (ωₘ) and the rotor angle value (θₑ) may still be generated and/or measured, e.g., for monitoring purposes, for example, by the RDC 1050 and the PP 1055, respectively. Position offset may be determined in the control system 1000, for example, by averaging the differences between the applied electrical angle (θ_{e_applied}) and the actual/measured electrical angle (θₑ) at the each of the steps. Therefore, in the control system 1000, the Park transformation expressed by Equations 3 and 4 may be expressed by the following Equations 14 and 15: [Equation 14] ${I}_{d} = {I}_{αs} ∗ cos \left({θ}_{e _ applied}\right) + {I}_{βs} ∗ sin \left({θ}_{e _ appliede}\right)$ [Equation 15] ${I}_{q} = {I}_{βs} ∗ cos \left({θ}_{e _ applied}\right) - {I}_{αs} ∗ sin \left({θ}_{e _ applied}\right)$

Similarly, in the control system 1000, the Inverse Park transformation expressed by Equations 6 and 7 may be expressed by the following Equations 16 and 17: [Equation 16] ${V}_{αs} = {V}_{d} ∗ cos \left({θ}_{e _ applied}\right) - {V}_{q} ∗ sin \left({θ}_{e _ applied}\right)$ [Equation 17] ${V}_{βs} = {V}_{q} ∗ cos \left({θ}_{e _ applied}\right) + {V}_{d} ∗ sin \left({θ}_{e _ applied}\right)$

As discussed above, such fixed position feedback torque control may lock the motor at the desired location while ensuring that the desired torque is applied, independent of the drive voltage. The control system 1000 may adjust the duty cycles automatically as needed to ensure the desired torque is applied. Also, when the load torques are known (e.g., based on the designed conditions), the fixed angle torque control system 1000 can be commanded to apply a large enough torque to overcome the load torques. This ensures that motor may lock into the desired electrical angle independent of the drive voltage and in the presence of any load torques. This makes the control system 1000 more generic and easier to port to other tools even if the drive voltages and load torques are different.

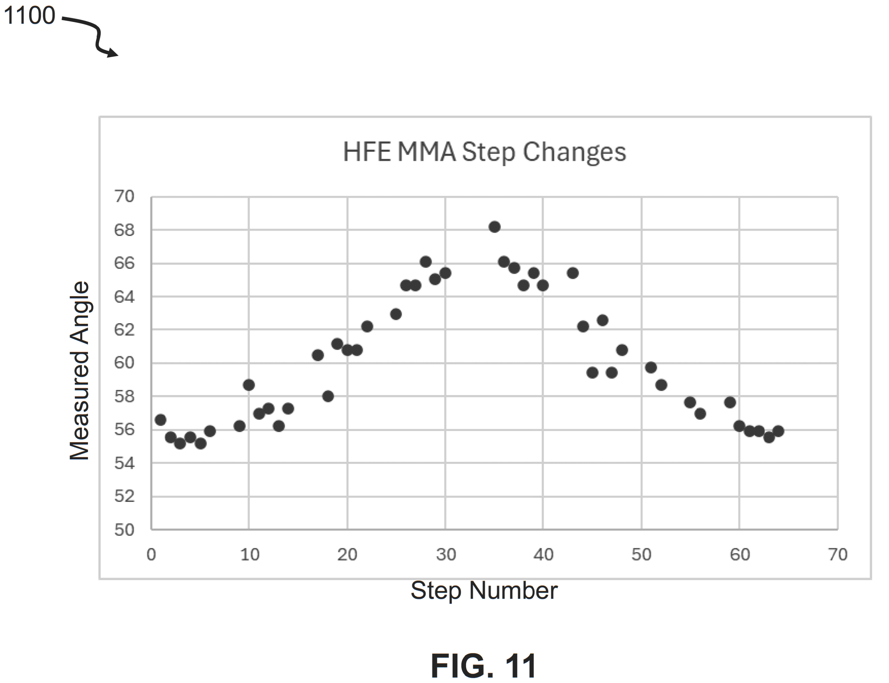

FIG. 11 is a graph of experimental results using the system of FIG. 10 with a PMSM.

FIG. 11 shows the results of applying a process in accordance with an example embodiment with a PMSM. The horizontal axis of the graph 1100 is a step number, and the vertical axis of the graph 1100 is the measured angle of the motor shaft of the PMSM in an electrical domain. In the graph 1100 of the experimental results shown in FIG. 11, the increments in measured electrical angle change over forty-eight (48) steps spanning over two full rotations of the motor shaft are plotted. Even though the load torque seen by the motor was varying and large, the method according to an example embodiment that was applied in the experiment was able apply the appropriate torque to overcome the load torque and step the motor through all the steps. The graph 1100 also shows the importance of averaging position offset over multiple steps to reduce the effect of variations in offset seen at different angles. As seen in the graph 1100, the variation in electrical angle offset measured from the ideal value can be as large as 8 electrical degrees, which can significantly impact the controller's performance if not properly addressed and/or corrected.

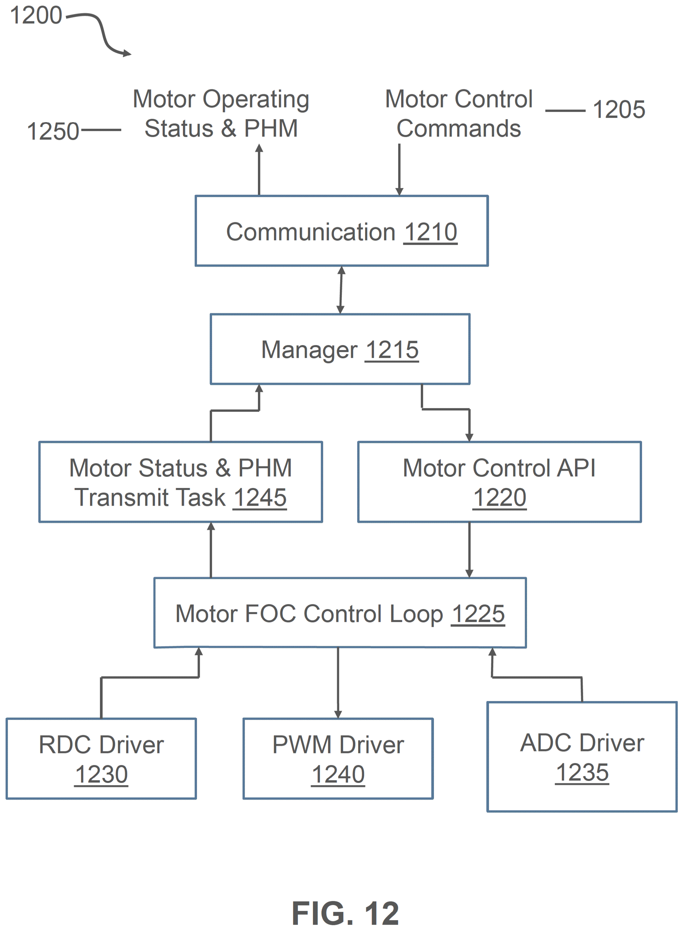

FIG. 12 is a functional block diagram of a motor control firmware according to an example embodiment of the present disclosure.

An example of motor control firmware 1200 may control a PMSM, for example, a three-phase PMSM, in different operation modes. The motor control firmware 1200 may receive an external control command, e.g., the motor control commands 1205, for example via a communication interface 1210. A manager 1215 may enable interoperability between devices, and may provide methods for configuring devices, even after installation. A communication protocol used for the motor control firmware 1200 may be a controller area network (CAN), which is a vehicle bus standard designed to enable efficient communication primarily between electronic control units (ECUs). The manager 1215 may instruct a motor control application programming interface (API) 1220 to operate a motor field-oriented control (FOC) control loop 1225. The motor FOC control loop 1225 may receive motor position and speed information from the PMSM via a resolver-to-digital converter (RDC) driver 1230 (e.g., for the RDC 450 of the FIG. 4 example), and current information from the PMSM via an analog-to-digital converter (ADC) driver 1235 (e.g., for the ADC 440 of the FIG. 4 example), and may control a pulse width modulation (PWM) driver 1240 to drive the PMSM. For example, the PWM driver 1240 may provide 3-phase pulse-width modulated duty cycles to operate a 3-phase PMSM.

The motor FOC control loop 1225 may provide motor status and prognostics and health management (PHM) information to a motor status and PHM transmit task module 1245, which may transmit that information to the manager 1215. Furthermore, the motor control firmware 1200 may provide an update on a motor operating status, as well as the PHM information, which may also include information regarding other parts of the motor controller, at 1250 via, e.g., from the manager 1215 via the communication interface 1210. For example, the update may be provided in real-time.

Example embodiments of the present disclosure can ensure that the motor will be able to match and overcome the load torques so that the motor shaft can be locked into desired position, even if when applied drive voltage is unknown or variable. Example embodiments can be applicable to any tools that employ PMSMs in which the drive voltage is variable, and the load torques seen by the motor are large and vary with shaft angle. As such, example embodiments can work even if the drive voltage is not variable, and load torques are constant. Thus, example embodiments can extend to a larger number of applications.

As an additional step towards automation, the algorithm implemented in accordance with an example embodiment may also store the determined position offset, e.g., into a NOR flash, for example if there is a significant change. This may reduce, minimize, or eliminate the need for hardcoding the position offset into software application, thus making the example embodiment more generic. The motor control application according to an example embodiment may also maintain or store a history of the last several values of position offsets for reference. The values, which may be stored over the history of the tool, can be analyzed for any trends, for example, to assess health the of tool.

Example embodiments of the present disclosure may improve a position offset algorithm to be more generic, and may improve the chances of successful and automated position offset determination, even in the case of variable and/or unknown drive voltages and variable and/or large angle dependent load torques. The new algorithm according to an example embodiment may provide improved chances of accurate determination of position offset, even in the case of variable and/or unknown drive voltage and variable and/or large angle dependent load torques.

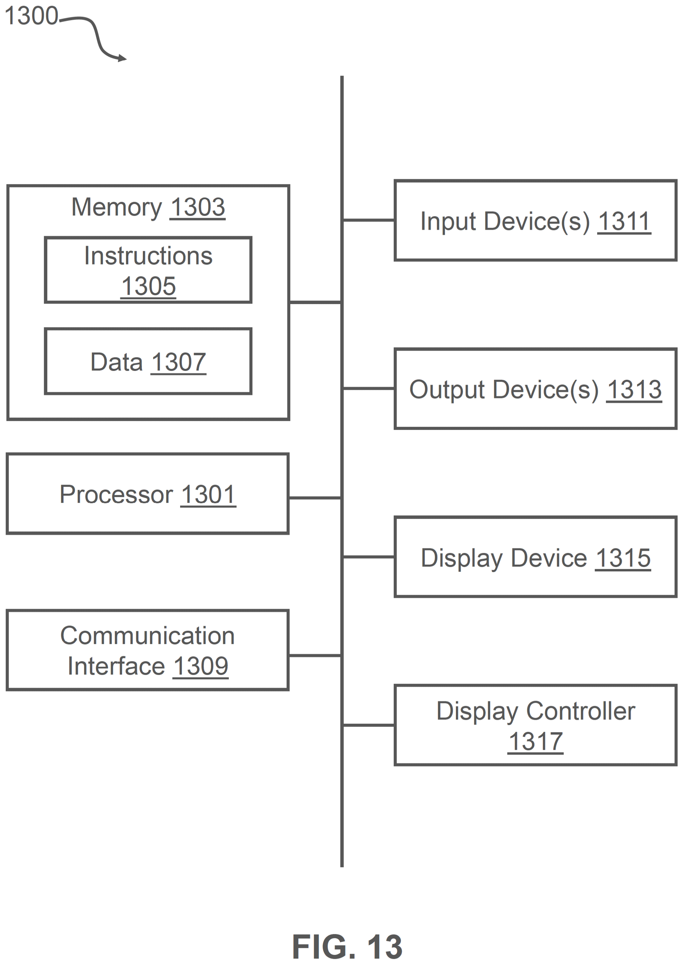

FIG. 13 illustrates certain components that may be included within a computer system according to an example embodiment of the present disclosure.

FIG. 13 illustrates certain components that may be included within a computer system 1300, which may be used to control features according to embodiments of the present disclosure, such as the features discussed with reference to FIGs. 1-12. One or more computer systems 1300 may be used to implement the various devices, components, and systems described herein.

The computer system 1300 includes a processor 1301. The processor 1301 may be a single processor or may include multiple processors and/or sub-processors. The processor 1301 may be a general-purpose single- or multi-chip microprocessor (e.g., an Advanced RISC (Reduced Instruction Set Computer) Machine (ARM)), a special-purpose microprocessor (e.g., a digital signal processor (DSP)), a microcontroller, a programmable gate array, etc. The processor 1301 may be referred to as a central processing unit (CPU). Although just a single processor 1301 is shown in the computer system 1300 of FIG. 13, in an alternative configuration, a combination of processors (e.g., an ARM and DSP) could be used. In one or more embodiments, the computer system 1300 further includes one or more graphics processing units (GPUs), which can provide processing services related to both entity classification and graph generation.

The computer system 1300 also includes memory 1303 in electronic communication with the processor 1301. The memory 1303 may be any electronic component capable of storing electronic information. For example, the memory 1303 may be embodied as random access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM) memory, registers, and so forth, including combinations thereof.

Instructions 1305 and data 1307 may be stored in the memory 1303. The instructions 1305 may be executable by the processor 1301 to implement some or all of the functionality disclosed herein. Executing the instructions 1305 may involve the use of the data 1307 that is stored in the memory 1303. Any of the various examples of modules and components described herein may be implemented, partially or wholly, as instructions 1305 stored in memory 1303 and executed by the processor 1301. Any of the various examples of data described herein may be among the data 1307 that is stored in memory 1303 and used during execution of the instructions 1305 by the processor 1301.

A computer system 1300 may also include one or more communication interfaces 1309 for communicating with other electronic devices. The communication interface(s) 1309 may be based on wired communication technology, wireless communication technology, or both. Some examples of communication interfaces 1309 include a Universal Serial Bus (USB), an Ethernet adapter, a wireless adapter that operates in accordance with an Institute of Electrical and Electronics Engineers (IEEE) 802.11 wireless communication protocol, a Bluetooth^{®} wireless communication adapter, and an infrared (IR) communication port.

A computer system 1300 may also include one or more input devices 1311 and one or more output devices 1313. Some examples of input devices 1311 include a keyboard, mouse, microphone, remote control device, button, joystick, trackball, touchpad, and lightpen. Some examples of output devices 1313 include a speaker and a printer. One specific type of output device that is typically included in a computer system 1300 is a display device 1315. Display devices 1315 used with embodiments disclosed herein may utilize any suitable image projection technology, such as liquid crystal display (LCD), light-emitting diode (LED), gas plasma, electroluminescence, or the like. A display controller 1317 may also be provided, for converting data 1307 stored in the memory 1303 into text, graphics, and/or moving images (as appropriate) shown on the display device 1315.

The various components of the computer system 1300 may be coupled together by one or more buses, which may include a power bus, a control signal bus, a status signal bus, a data bus, etc. For the sake of clarity, the various buses are illustrated in FIG. 13 as a bus system 1319.

Some definitions and abbreviations used herein are provided as follows:
RDC - Resolver to Digital Converter
FOC - Field Oriented Control
PID - proportional-integral-derivative
SPWM - Sinusoidal Pulse Width Modulation
SVPWM - Space Vector Pulse Width Modulation
HFE - Houston Formation Evaluation Center
MMA - M10 Modulator Assembly (this includes the PMSM and resolver and it is an assembly that is used to modulate pressure signals during drilling operation to send telemetry)
Iₐₛ - Magnitude of current flowing into Phase A of motor
I_{bs} - Magnitude of current flowing into Phase B of motor
I_{cs} - Magnitude of current flowing into Phase B of motor
PARK - Park transformation
I_PARK - Inverse Park transformation
CLARK - Clark Transformation
SVGEN - Space Vector Generation
I_{αs} - Magnitude of current in α axis (same as the *a*) in stator frame of reference
I_{βs} - Magnitude of current in β axis in stator frame of reference
I_{d} - Magnitude of direct component of stator current in rotor frame of reference
I_{q} - Magnitude of quadrature component of stator current in rotor frame of reference (the component that is responsible for torque production)
I_{d_cmd} - Reference value of I_{d} (derived from torque demand)
I_{q_cmd} - Reference value of I_{q} (derived from torque demand)
V_{ds} - Direct component of stator voltage vector referrer to rotor frame of reference
V_{qs} - Quadrature component of stator voltage vector referred to rotor frame of reference
Vₐₛ - Magnitude of sinusoidal voltage on Phase A of motor
V_{bs} - Magnitude of sinusoidal voltage on Phase B of motor
V_{cs} - Magnitude of sinusoidal voltage on Phase C of motor
Tₐ - Duty cycle (on time) of Phase A PWM output
T_{b} - Duty cycle (on time) of Phase B PWM output
T_{c} - Duty cycle (on time) of Phase C PWM output
RDC - Resolver to digital converter
θₘ - Rotor angle in mechanical domain
θₑ - Rotor angle in electrical domain
θ_{*e*_*fixed*} - Fixed rotor angle in electrical domain
θ_{*e*_*applied*} - Applied rotor angle in electrical domain
ωₘ - Rotor speed in mechanical domain
K_{T} - Motor torque constant
I_{d} PID - PID controller responsible for achieving the desired I_{d} current
I_{q} PID - PID controller responsible for achieving the desired I_{q} current

Following are sections in accordance with at least one embodiment of the present disclosure:
Clause 1: A system for controlling a permanent magnet synchronous motor (PMSM), including: a torque command controller configured to: receive a torque command value (Torque_{command}), divide the torque command value (Torque_{command}) by a motor torque constant for the PMSM (K_{T}) to generate a reference quadrature component value of a stator current in a rotor frame of reference (I_{q_ref}), and output the reference quadrature component value of the stator current in the rotor frame of reference (I_{q_ref}), an offset controller configured to: receive a fixed rotor angle value (θ_{e_fixed}), and offset the fixed rotor angle value (θ_{e_fixed}) by -90° (degrees) to generate and output an applied rotor angle value (θ_{e_applied}), a torque proportional-integral-derivative (PID) controller including: an I_{d} PID controller configured to: receive a reference direct component value of the stator current in the rotor frame of reference (I_{d_ref}) combined with a generated direct component value of stator current (I_{d}), and output a direct component of stator voltage vector in the rotor frame of reference (V_{ds}), and an I_{q} PID controller configured to: receive the reference quadrature component value of the stator current in the rotor frame of reference (I_{q_ref}) combined with a generated quadrature component value of stator current (I_{q}), and output a quadrature component of stator voltage vector in the rotor frame of reference (V_{qs}), a field-oriented control (FOC) transfer function generator configured to: receive: the direct component of stator voltage vector in the rotor frame of reference (V_{ds}), the quadrature component of stator voltage vector in the rotor frame of reference (V_{qs}), and the applied rotor angle value (θ_{e_applied}), generate: a first voltage value in an α axis in a stator frame of reference (V_{αs}), and a second voltage value in a β axis in the stator frame of reference (V_{βs}), and a space vector (SV) pulse width modulation (PWM) generator configured to: receive, from the FOC transfer function generator: the first voltage value (V_{αs}), and the second voltage value (V_{βs}), and generate a PWM waveform to operate the PMSM based on the first voltage value (V_{αs}) and the second voltage value (V_{βs}), the PWM waveform including a respective duty cycle waveform component (*Tₐ, T_{b}, T_{c}*) for each phase of the PMSM.
Clause 2: The system of clause 1, wherein the FOC transfer function generator includes: a Clarke transformation generator configured to transform three-phase current values (Iₐₛ, I_{bs}, I_{cs}) from the PMSM from a three-phase reference frame into two-axis orthogonal stationary reference frame values (I_{αs}, I_{βs}) using a Clarke transformation, a Park transformation generator configured to transform the two-axis orthogonal stationary reference frame values (I_{αs}, I_{βs}) from the Clarke transformation generator, with the applied rotor angle value (θ_{e_applied}) from the offset controller, into rotating reference frame values using a Park transformation, the rotating reference frame values including: the generated direct component value of stator current (I_{d}), and the generated quadrature component value of stator current (I_{q}), and an inverse Park transformation generator configured to transform values in the rotating reference frame to the two-axis orthogonal stationary reference frame using an Inverse Park transformation by: receiving: the applied rotor angle value (θ_{e_applied}) from the offset controller, the direct component of stator voltage vector in the rotor frame of reference (V_{ds}) from the I_{d} PID controller, and the quadrature component of stator voltage vector in the rotor frame of reference (V_{qs}) from the I_{q} PID controller, and outputting: the first voltage value (V_{αs}), and the second voltage value (V_{βs}).
Clause 3: The system of clause 2, further including: a plurality of gate drivers configured to: receive the duty cycle waveform components from the SV PWM generator, and convert the duty cycle waveform components into respective pulse wave modulated signals, and a power inverter configured to: receive the pulse wave modulated signals, and provide the pulse wave modulated signals to the PMSM.
Clause 4: The system of clause 3, further including: an analog-to-digital converter (ADC) configured to: receive the pulse wave modulated signals from the power inverter, and convert the pulse wave modulated signals into the three-phase current values (Iₐₛ, I_{bs}, I_{cs}).
Clause 5: The system of clause 4, further including: a resolver configured to measure degrees of rotation of the PMSM, and a resolver-to-digital converter (RDC) configured to: receive the measured degrees of rotation from the resolver, and determine: the first rotor angle value (θₘ) for the position PID controller, and a rotor speed (ωₘ).
Clause 6: The system of clause 5, further including a pole pair converter configured to convert the first rotor angle value (θₘ) into a second rotor angle value (θₑ).
Clause 7: The system of clause 2, wherein the Clark transformation is expressed by: ${I}_{αs} = {I}_{as}$ ${I}_{βs} = \frac{1}{\sqrt{3}} \left({I}_{as}+2{I}_{bs}\right)$ and ${I}_{as} + {I}_{bs} + {I}_{cs} = 0$ where *I_{αs}, I_{βs}* are orthogonal stationary reference frame quantities.
Clause 8: The system of clause 7, wherein the Park transformation is expressed by: ${I}_{d} = {I}_{αs} ∗ cos \left({θ}_{e _ applied}\right) + {I}_{βs} ∗ sin \left({θ}_{e _ applied}\right) ,$ ${I}_{q} = {I}_{βs} ∗ cos \left({θ}_{e _ applied}\right) - {I}_{αs} ∗ sin \left({θ}_{e _ applied}\right) ,$ and ${θ}_{e} = PP ∗ {θ}_{m} ,$ where:
   *I_{d}, I_{q}* are components of a stator current vector in the rotating reference frame,
   *I_{d}* is in line with a rotor magnetic field,
   *I_{q}* is in quadrature with the rotor magnetic field, and
   *θ_{e_applied}* is an angle of rotation in an electrical domain.
Clause 9: The system of clause 8, wherein the Inverse Park transformation is expressed by: ${V}_{αs} = {V}_{d} ∗ cos \left({θ}_{e _ applied}\right) - {V}_{q} ∗ sin \left({θ}_{e _ applied}\right) ,$ and ${V}_{βs} = {V}_{q} ∗ cos \left({θ}_{e _ applied}\right) + {V}_{d} ∗ sin \left({θ}_{e _ applied}\right) ,$ where:
   *V_{αs}, V_{βs}* are orthogonal stationary reference frame quantities, and
   *V_{d}, V_{q}* are rotating reference frame quantities.
Clause 10: The system of clause 1, further including a variable-frequency power supply configured to supply power to the PMSM.
Clause 11: A method for controlling a permanent magnet synchronous motor (PMSM), the method including: receiving a torque command value (Torque_{command}) via a torque command controller, dividing the torque command value (Torque_{command}) by a motor torque constant for the PMSM (K_{T}) to generate a reference quadrature component value of a stator current in a rotor frame of reference (I_{q_ref}) via the torque command controller, outputting the reference quadrature component value of the stator current in the rotor frame of reference (I_{q_ref}) via the torque command controller, receiving a fixed rotor angle value (θ_{e_fixed}) via an offset controller, offsetting the fixed rotor angle value (θ_{e_fixed}) by -90° (degrees) to generate and output an applied rotor angle value (θ_{e_applied}) via the offset controller, receiving a reference direct component value of the stator current in the rotor frame of reference (I_{d_ref}) combined with a generated direct component value of stator current (I_{d}) via a torque proportional-integral-derivative (PID) controller including an I_{d} PID controller, outputting a direct component of stator voltage vector in the rotor frame of reference (V_{ds}) via the I_{d} PID controller, receiving the reference quadrature component value of the stator current in the rotor frame of reference (I_{q_ref}) combined with a generated quadrature component value of stator current (I_{q}) via the torque PID controller further including an I_{q} PID controller, outputting a quadrature component of stator voltage vector in the rotor frame of reference (V_{qs}) via the I_{q} PID controller, receiving, via a field-oriented control (FOC) transfer function generator: the direct component of stator voltage vector in the rotor frame of reference (V_{ds}), the quadrature component of stator voltage vector in the rotor frame of reference (V_{qs}), and the applied rotor angle value (θ_{e_applied}), generating, via the FOC transfer function generator: a first voltage value in an α axis in a stator frame of reference (V_{αs}), and a second voltage value in a β axis in the stator frame of reference (V_{βs}), receiving, via a space vector (SV) pulse width modulation (PWM) generator from the FOC transfer function generator: the first voltage value (V_{αs}), and the second voltage value (V_{βs}), and generating, via the SV PWM generator, a PWM waveform to operate the PMSM based on the first voltage value (V_{αs}) and the second voltage value (V_{βs}), the PWM waveform including a respective duty cycle waveform component (*Tₐ, T_{b}, T_{c}*) for each phase of the PMSM.
Clause 12: The method of clause 11, wherein the FOC transfer function generator includes: a Clarke transformation generator configured to transform three-phase current values (Iₐₛ, I_{bs}, I_{cs}) from the PMSM from a three-phase reference frame into two-axis orthogonal stationary reference frame values (I_{αs}, I_{βs}) using a Clarke transformation, a Park transformation generator configured to transform the two-axis orthogonal stationary reference frame values (I_{αs}, I_{βs}) from the Clarke transformation generator, with the applied rotor angle value (θ_{e_applied}) from the offset controller, into rotating reference frame values using a Park transformation, the rotating reference frame values including: the generated direct component value of stator current (I_{d}), and the generated quadrature component value of stator current (I_{q}), and an inverse Park transformation generator configured to transform values in the rotating reference frame to the two-axis orthogonal stationary reference frame using an Inverse Park transformation by: receiving: the applied rotor angle value (θ_{e_applied}) from the offset controller, the direct component of stator voltage vector in the rotor frame of reference (V_{ds}) from the I_{d} PID controller, and the quadrature component of stator voltage vector in the rotor frame of reference (V_{qs}) from the I_{q} PID controller, and outputting: the first voltage value (V_{αs}), and the second voltage value (V_{βs}).
Clause 13: The method of clause 12, further including: a plurality of gate drivers configured to: receive the duty cycle waveform components from the SV PWM generator, and convert the duty cycle waveform components into respective pulse wave modulated signals, and a power inverter configured to: receive the pulse wave modulated signals, and provide the pulse wave modulated signals to the PMSM.
Clause 14: The method of clause 13, further including: an analog-to-digital converter (ADC) configured to: receive the pulse wave modulated signals from the power inverter, and convert the pulse wave modulated signals into the three-phase current values (Iₐₛ, I_{bs}, I_{cs}).
Clause 15: The method of clause 14, further including: a resolver configured to measure degrees of rotation of the PMSM, and a resolver-to-digital converter (RDC) configured to: receive the measured degrees of rotation from the resolver, and determine: the first rotor angle value (θₘ) for the position PID controller, and a rotor speed (ωₘ).
Clause 16: The method of clause 15, further including a pole pair converter configured to convert the first rotor angle value (θₘ) into a second rotor angle value (θₑ).
Clause 17: The method of clause 12, wherein the Clark transformation is expressed by: ${I}_{αs} = {I}_{as} ,$ ${I}_{βs} = \frac{1}{\sqrt{3}} \left({I}_{as}+2{I}_{bs}\right) ,$ and ${I}_{as} + {I}_{bs} + {I}_{cs} = 0 ,$ where *I_{αs}, I_{βs}* are orthogonal stationary reference frame quantities.
Clause 18: The method of clause 17, wherein the Park transformation is expressed by: ${I}_{d} = {I}_{αs} ∗ cos \left({θ}_{e _ applied}\right) + {I}_{βs} ∗ sin \left({θ}_{e _ applied}\right) ,$ ${I}_{q} = {I}_{βs} ∗ cos \left({θ}_{e _ applied}\right) - {I}_{αs} ∗ sin \left({θ}_{e _ applied}\right) ,$ and ${θ}_{e} = PP ∗ {θ}_{m} ,$ where:
   *I_{d}, I_{q}* are components of a stator current vector in the rotating reference frame,
   *I_{d}* is in line with a rotor magnetic field,
   *I_{q}* is in quadrature with the rotor magnetic field, and
   *θ_{e_applied}* is an angle of rotation in an electrical domain.
Clause 19: The method of clause 18, wherein the Inverse Park transformation is expressed by: ${V}_{αs} = {V}_{d} ∗ cos \left({θ}_{e _ applied}\right) - {V}_{q} ∗ sin \left({θ}_{e _ applied}\right) ,$ and ${V}_{βs} = {V}_{q} ∗ cos \left({θ}_{e _ applied}\right) + {V}_{d} ∗ sin \left({θ}_{e _ applied}\right) ,$ where:
   *V_{αs}, V_{βs}* are orthogonal stationary reference frame quantities, and
   *V_{d}, V_{q}* are rotating reference frame quantities.
Clause 20: The method of clause 11, further including a variable-frequency power supply configured to supply power to the PMSM.

Systems and software, e.g., implemented on a non-transitory computer-readable medium, for performing the methods discussed herein are also within the scope of embodiments of the present disclosure.

Embodiments of the present disclosure may thus utilize a special purpose or general-purpose computing system including computer hardware, such as, for example, one or more processors and system memory. Embodiments within the scope of the present disclosure also include physical and other computer-readable media for carrying or storing computer-executable instructions and/or data structures, including applications, tables, data, libraries, or other modules used to execute particular functions or direct selection or execution of other modules. Such computer-readable media can be any available media that can be accessed by a general purpose or special purpose computer system. Computer-readable media that store computer-executable instructions (or software instructions) are physical storage media. Computer-readable media that carry computer-executable instructions are transmission media. Thus, by way of example, and not limitation, embodiments of the present disclosure can include at least two distinctly different kinds of computer-readable media, namely physical storage media or transmission media. Combinations of physical storage media and transmission media should also be included within the scope of computer-readable media.

Both physical storage media and transmission media may be used temporarily store or carry, software instructions in the form of computer readable program code that allows performance of embodiments of the present disclosure. Physical storage media may further be used to persistently or permanently store such software instructions. Examples of physical storage media include physical memory (e.g., RAM, ROM, EPROM, EEPROM, etc.), optical disk storage (e.g., CD, DVD, HDDVD, Blu-ray, etc.), storage devices (e.g., magnetic disk storage, tape storage, diskette, etc.), flash or other solid-state storage or memory, or any other non-transmission medium which can be used to store program code in the form of computer-executable instructions or data structures and which can be accessed by a general purpose or special purpose computer, whether such program code is stored as or in software, hardware, firmware, or combinations thereof.

A "network" or "communications network" may generally be defined as one or more data links that enable the transport of electronic data between computer systems and/or modules, engines, and/or other electronic devices. When information is transferred or provided over a communication network or another communications connection (either hardwired, wireless, or a combination of hardwired or wireless) to a computing device, the computing device properly views the connection as a transmission medium. Transmission media can include a communication network and/or data links, carrier waves, wireless signals, and the like, which can be used to carry desired program or template code means or instructions in the form of computer-executable instructions or data structures and which can be accessed by a general purpose or special purpose computer.

Further, upon reaching various computer system components, program code in the form of computer-executable instructions or data structures can be transferred automatically or manually from transmission media to physical storage media (or vice versa). For example, computer-executable instructions or data structures received over a network or data link can be buffered in memory (e.g., RAM) within a network interface module (NIC), and then eventually transferred to computer system RAM and/or to less volatile physical storage media at a computer system. Thus, it should be understood that physical storage media can be included in computer system components that also (or even primarily) utilize transmission media.

One or more specific embodiments of the present disclosure are described herein. These described embodiments are examples of the presently disclosed techniques. Additionally, in an effort to provide a concise description of these embodiments, not all features of an actual embodiment may be described in the specification. It should be appreciated that in the development of any such actual implementation, as in any engineering or design project, numerous embodiment-specific decisions will be made to achieve the developers' specific goals, such as compliance with system-related and business-related constraints, which may vary from one embodiment to another. Moreover, it should be appreciated that such a development effort might be complex and time consuming, but would nevertheless be a routine undertaking of design, fabrication, and manufacture for those of ordinary skill having the benefit of this disclosure.

The articles "a," "an," and "the" are intended to mean that there are one or more of the elements in the preceding descriptions. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. For example, any element described in relation to an embodiment herein may be combinable with any element of any other embodiment described herein. Numbers, percentages, ratios, or other values stated herein are intended to include that value, and also other values that are "about" or "approximately" the stated value, as would be appreciated by one of ordinary skill in the art encompassed by embodiments of the present disclosure. A stated value should therefore be interpreted broadly enough to encompass values that are at least close enough to the stated value to perform a desired function or achieve a desired result. The stated values include at least the variation to be expected in a suitable manufacturing or production process, and may include values that are within 5%, within 1%, within 0.1%, or within 0.01% of a stated value.

A person having ordinary skill in the art should realize in view of the present disclosure that equivalent constructions do not depart from the spirit and scope of the present disclosure, and that various changes, substitutions, and alterations may be made to embodiments disclosed herein without departing from the spirit and scope of the present disclosure. Equivalent constructions, including functional "means-plus-function" clauses are intended to cover the structures described herein as performing the recited function, including both structural equivalents that operate in the same manner, and equivalent structures that provide the same function. It is the express intention of the applicant not to invoke means-plus-function or other functional claiming for any claim except for those in which the words 'means for' appear together with an associated function. Each addition, deletion, and modification to the embodiments that falls within the meaning and scope of the claims is to be embraced by the claims.

The terms "approximately," "about," and "substantially" as used herein represent an amount close to the stated amount that still performs a desired function or achieves a desired result. For example, the terms "approximately," "about," and "substantially" may refer to an amount that is within less than 5% of, within less than 1% of, within less than 0.1% of, and within less than 0.01% of a stated amount. Further, it should be understood that any directions or reference frames in the preceding description are merely relative directions or movements. For example, any references to "up" and "down" or "above" or "below" are merely descriptive of the relative position or movement of the related elements. Any trademarks used herein are the respective property of their respective owners.

The present disclosure may be embodied in other specific forms without departing from its spirit or characteristics. The described embodiments are to be considered as illustrative and not restrictive. The scope of the disclosure is, therefore, indicated by the appended claims rather than by the foregoing description. Changes that come within the meaning and range of equivalency of the claims are to be embraced within their scope.

## Claims

1. A system for controlling a permanent magnet synchronous motor (PMSM), comprising:
a torque command controller configured to:
receive a torque command value (Torque_{command});
divide the torque command value (Torque_{command}) by a motor torque constant for the PMSM (K_{T}) to generate a reference quadrature component value of a stator current in a rotor frame of reference (I_{q_ref}); and
output the reference quadrature component value of the stator current in the rotor frame of reference (I_{q_ref});
an offset controller configured to:
receive a fixed rotor angle value (θ_{e_fixed}); and
offset the fixed rotor angle value (θ_{e_fixed}) by -90° (degrees) to generate and output an applied rotor angle value (θ_{e_applied});
a torque proportional-integral-derivative (PID) controller comprising:
an I_{d} PID controller configured to:
receive a reference direct component value of the stator current in the rotor frame of reference (I_{d_ref}) combined with a generated direct component value of stator current (I_{d}); and
output a direct component of stator voltage vector in the rotor frame of reference (V_{ds}); and
an I_{q} PID controller configured to:
receive the reference quadrature component value of the stator current in the rotor frame of reference (I_{q_ref}) combined with a generated quadrature component value of stator current (I_{q}); and
output a quadrature component of stator voltage vector in the rotor frame of reference (V_{qs});
a field-oriented control (FOC) transfer function generator configured to:
receive:
the direct component of stator voltage vector in the rotor frame of reference (V_{ds});
the quadrature component of stator voltage vector in the rotor frame of reference (V_{qs}); and
the applied rotor angle value (θ_{e_applied});
generate:
a first voltage value in an α axis in a stator frame of reference (V_{αs}); and
a second voltage value in a β axis in the stator frame of reference (V_{βs}); and
a space vector (SV) pulse width modulation (PWM) generator configured to:
receive, from the FOC transfer function generator:
the first voltage value (V_{αs}); and
the second voltage value (V_{βs}); and
generate a PWM waveform to operate the PMSM based on the first voltage value (V_{αs}) and the second voltage value (V_{βs}), the PWM waveform comprising a respective duty cycle waveform component (*Tₐ, T_{b}*, *T_{c}*) for each phase of the PMSM;
preferably further comprising:
a variable-frequency power supply configured to supply power to the PMSM.

2. The system of claim 1, wherein the FOC transfer function generator comprises:
a Clarke transformation generator configured to transform three-phase current values (Iₐₛ, I_{bs}, I_{cs}) from the PMSM from a three-phase reference frame into two-axis orthogonal stationary reference frame values (I_{αs}, I_{βs}) using a Clarke transformation;
a Park transformation generator configured to transform the two-axis orthogonal stationary reference frame values (I_{αs}, I_{βs}) from the Clarke transformation generator, with the applied rotor angle value (θ_{e_applied}) from the offset controller, into rotating reference frame values using a Park transformation, the rotating reference frame values comprising:
the generated direct component value of stator current (I_{d}); and
the generated quadrature component value of stator current (I_{q}); and
an inverse Park transformation generator configured to transform values in the rotating reference frame to the two-axis orthogonal stationary reference frame using an Inverse Park transformation by:
receiving:
the applied rotor angle value (θ_{e_applied}) from the offset controller;
the direct component of stator voltage vector in the rotor frame of reference (V_{ds}) from the I_{d} PID controller; and
the quadrature component of stator voltage vector in the rotor frame of reference (V_{qs}) from the I_{q} PID controller; and
outputting:
the first voltage value (V_{αs}); and
the second voltage value (V_{βs}).

3. The system of claim 2, further comprising:
a plurality of gate drivers configured to:
receive the duty cycle waveform components from the SV PWM generator; and
convert the duty cycle waveform components into respective pulse wave modulated signals; and
a power inverter configured to:
receive the pulse wave modulated signals; and
provide the pulse wave modulated signals to the PMSM.

4. The system of claim 3, further comprising:
an analog-to-digital converter (ADC) configured to:
receive the pulse wave modulated signals from the power inverter; and
convert the pulse wave modulated signals into the three-phase current values (Iₐₛ, I_{bs}, I_{cs}).

5. The system of claim 4, further comprising:
a resolver configured to measure degrees of rotation of the PMSM; and
a resolver-to-digital converter (RDC) configured to:
receive the measured degrees of rotation from the resolver; and
determine:
the first rotor angle value (θₘ) for the position PID controller; and
a rotor speed (ωₘ);
preferably further comprising:
a pole pair converter configured to convert the first rotor angle value (θₘ) into a second rotor angle value (θₑ).

6. The system of any one of the claims 2 - 5, wherein the Clark transformation is expressed by: ${I}_{αs} = {I}_{as} ;$ ${I}_{βs} = \frac{1}{\sqrt{3}} \left({I}_{as}+2{I}_{bs}\right) ;$ and ${I}_{as} + {I}_{bs} + {I}_{cs} = 0 ,$ where *I_{αs}, I_{βs}* are orthogonal stationary reference frame quantities.

7. The system of claim 6, wherein the Park transformation is expressed by: ${I}_{d} = {I}_{αs} ∗ cos \left({θ}_{e _ applied}\right) + {I}_{βs} ∗ sin \left({θ}_{e _ applied}\right) ;$ ${I}_{q} = {I}_{βs} ∗ cos \left({θ}_{e _ applied}\right) - {I}_{αs} ∗ sin \left({θ}_{e _ applied}\right) ;$ and ${θ}_{e} = PP ∗ {θ}_{m} ,$ where:
*I_{d}, I_{q}* are components of a stator current vector in the rotating reference frame,
*I_{d}* is in line with a rotor magnetic field,
*I_{q}* is in quadrature with the rotor magnetic field, and
*θ_{e_applied}* is an angle of rotation in an electrical domain.

8. The system of claim 7, wherein the Inverse Park transformation is expressed by: ${V}_{αs} = {V}_{d} ∗ cos \left({θ}_{e _ applied}\right) - {V}_{q} ∗ sin \left({θ}_{e _ applied}\right) ;$ and ${V}_{βs} = {V}_{q} ∗ cos \left({θ}_{e _ applied}\right) + {V}_{d} ∗ sin \left({θ}_{e _ applied}\right) ,$ where:
*V_{αs}, V_{βs}* are orthogonal stationary reference frame quantities, and
*V_{d}, V_{q}* are rotating reference frame quantities.

9. A method for controlling a permanent magnet synchronous motor (PMSM), the method comprising:
receiving a torque command value (Torque_{command}) via a torque command controller;
dividing the torque command value (Torque_{command}) by a motor torque constant for the PMSM (K_{T}) to generate a reference quadrature component value of a stator current in a rotor frame of reference (I_{q_ref}) via the torque command controller;
outputting the reference quadrature component value of the stator current in the rotor frame of reference (I_{q_ref}) via the torque command controller;
receiving a fixed rotor angle value (θ_{e_fixed}) via an offset controller;
offsetting the fixed rotor angle value (θ_{e_fixed}) by -90° (degrees) to generate and output an applied rotor angle value (θ_{e_applied}) via the offset controller;
receiving a reference direct component value of the stator current in the rotor frame of reference (I_{d_ref}) combined with a generated direct component value of stator current (I_{d}) via a torque proportional-integral-derivative (PID) controller comprising an I_{d} PID controller;
outputting a direct component of stator voltage vector in the rotor frame of reference (V_{ds}) via the I_{d} PID controller;
receiving the reference quadrature component value of the stator current in the rotor frame of reference (I_{q_ref}) combined with a generated quadrature component value of stator current (I_{q}) via the torque PID controller further comprising an I_{q} PID controller;
outputting a quadrature component of stator voltage vector in the rotor frame of reference (V_{qs}) via the I_{q} PID controller;
receiving, via a field-oriented control (FOC) transfer function generator:
the direct component of stator voltage vector in the rotor frame of reference (V_{ds});
the quadrature component of stator voltage vector in the rotor frame of reference (V_{qs}); and
the applied rotor angle value (θ_{e_applied});
generating, via the FOC transfer function generator:
a first voltage value in an α axis in a stator frame of reference (V_{αs}); and
a second voltage value in a β axis in the stator frame of reference (V_{βs});
receiving, via a space vector (SV) pulse width modulation (PWM) generator from the FOC transfer function generator:
the first voltage value (V_{αs}); and
the second voltage value (V_{βs}); and
generating, via the SV PWM generator, a PWM waveform to operate the PMSM based on the first voltage value (V_{αs}) and the second voltage value (V_{βs}), the PWM waveform comprising a respective duty cycle waveform component (*Tₐ, T_{b}, T_{c}*) for each phase of the PMSM,
preferably further comprising:
supplying power to the PMSM with a variable-frequency power supply.

10. The method of claim 9, wherein the FOC transfer function generator comprises:
a Clarke transformation generator configured to transform three-phase current values (Iₐₛ, I_{bs}, I_{cs}) from the PMSM from a three-phase reference frame into two-axis orthogonal stationary reference frame values (I_{αs}, I_{βs}) using a Clarke transformation;
a Park transformation generator configured to transform the two-axis orthogonal stationary reference frame values (I_{αs}, I_{βs}) from the Clarke transformation generator, with the applied rotor angle value (θ_{e_applied}) from the offset controller, into rotating reference frame values using a Park transformation, the rotating reference frame values comprising:
the generated direct component value of stator current (I_{d}); and
the generated quadrature component value of stator current (I_{q}); and
an inverse Park transformation generator configured to transform values in the rotating reference frame to the two-axis orthogonal stationary reference frame using an Inverse Park transformation by:
receiving:
the applied rotor angle value (θ_{e_applied}) from the offset controller;
the direct component of stator voltage vector in the rotor frame of reference (V_{ds}) from the I_{d} PID controller; and
the quadrature component of stator voltage vector in the rotor frame of reference (V_{qs}) from the I_{q} PID controller; and
outputting:
the first voltage value (V_{αs}); and
the second voltage value (V_{βs}).

11. The method of claim 10, further comprising:
a plurality of gate drivers configured to:
receive the duty cycle waveform components from the SV PWM generator; and
convert the duty cycle waveform components into respective pulse wave modulated signals; and
a power inverter configured to:
receive the pulse wave modulated signals; and
provide the pulse wave modulated signals to the PMSM.

12. The method of claim 11, further comprising:
an analog-to-digital converter (ADC) configured to:
receive the pulse wave modulated signals from the power inverter; and
convert the pulse wave modulated signals into the three-phase current values (Iₐₛ, I_{bs}, I_{cs}).

13. The method of claim 12, further comprising:
a resolver configured to measure degrees of rotation of the PMSM; and
a resolver-to-digital converter (RDC) configured to:
receive the measured degrees of rotation from the resolver; and
determine:
the first rotor angle value (θₘ) for the position PID controller; and
a rotor speed (ωₘ),
preferably further comprising:
converting the first rotor angle value (θₘ) into a second rotor angle value (θₑ) with a pole pair converter.

14. The method of any one of the claims 10 - 13, wherein the Clark transformation is expressed by: ${I}_{αs} = {I}_{as} ;$ ${I}_{βs} = \frac{1}{\sqrt{3}} \left({I}_{as}+2{I}_{bs}\right) ;$ and ${I}_{as} + {I}_{bs} + {I}_{cs} = 0 ,$ where *I_{αs}, I_{βs}* are orthogonal stationary reference frame quantities.

15. The method of claim 14, wherein the Park transformation is expressed by: ${I}_{d} = {I}_{αs} ∗ cos \left({θ}_{e _ applied}\right) + {I}_{βs} ∗ sin \left({θ}_{e _ applied}\right) ;$ ${I}_{q} = {I}_{βs} ∗ cos \left({θ}_{e _ applied}\right) - {I}_{αs} ∗ sin \left({θ}_{e _ applied}\right) ;$ and ${θ}_{e} = PP ∗ {θ}_{m} ,$ where:
*I_{d}, I_{q}* are components of a stator current vector in the rotating reference frame,
*I_{d}* is in line with a rotor magnetic field,
*I_{q}* is in quadrature with the rotor magnetic field, and
*θ_{e_applied}* is an angle of rotation in an electrical domain,
wherein the Inverse Park transformation is preferably expressed by: ${V}_{αs} = {V}_{d} ∗ cos \left({θ}_{e _ applied}\right) - {V}_{q} ∗ sin \left({θ}_{e _ applied}\right) ;$ and ${V}_{βs} = {V}_{q} ∗ cos \left({θ}_{e _ applied}\right) + {V}_{d} ∗ sin \left({θ}_{e _ applied}\right) ,$ where:
*V_{αs}, V_{βs}* are orthogonal stationary reference frame quantities, and
*V_{d}, V_{q}* are rotating reference frame quantities.
